# EUROPÄISCHE PATENTANMELDUNG

(11) **EP 4 557 664 A1**
(43) Veröffentlichungstag der Anmeldung: **21.05.2025**
(21) Anmeldenummer: 23210924.9
(22) Anmeldetag: 20.11.2023
(51) Int. Cl.: H04L 9/40, G06F 21/44, G06F 21/64

(54) **KOMBINIERTE HARDWARE-ATTESTIERUNG UND EINE SOFTWARE-ATTESTIERUNG EINES GERÄTS**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Die Erfindung betrifft ein Verfahren zum Bilden einer Attestierung (15) eines Geräts (1),
mit den Schritten:
- ein Hinterlegen einer Hardware-Spezifikation des Geräts (1) in einer Hardware-Attestierung, wobei die Hardware-Spezifikation auf einer Hardware-Identität des Geräts (1) basiert,
- ein Erfassen der auf dem Gerät (1) installieren Anwendungsprogramme (12),
- ein Erstellen einer Anwendungsprogramm-Spezifikation basierend auf den erfassten installieren Anwendungsprogrammen (12),
- ein Hinterlegen der Anwendungsprogramm-Spezifikation in einer Software-Attestierung, und
- ein Bilden der Attestierung (15) des Geräts (1) durch:
o ein Hinterlegen der Hardware-Attestierung in der Attestierung (15), und
o ein Hinterlegen der Software-Attestierung oder eines Verweises auf die Software-Attestierung in der Attestierung (15).

Außerdem betrifft die Erfindung ein zugehöriges Computerprogrammprodukt und ein übergeordnetes Gerät und eine übergeordnete Anlage.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Verfahren zum Bilden einer Attestierung eines Geräts. Außerdem betrifft die Erfindung ein zugehöriges Computerprogrammprodukt und ein übergeordnetes Gerät und eine übergeordnete Anlage.

### Beschreibung des Stands der Technik

Ein Gerät kann sich durch ein Gerätezertifikat (LDevID, IDevID) authentisieren. Ein Gerätezertifikat umfasst insbesondere den Gerätehersteller, den Gerätetyp (Modell, Version) und die Seriennummer des Geräts.

Es ist bekannt, dass sich ein Gerät mittels eines digitalen Authentisierungszertifikats authentisieren kann. Es ist auch bekannt, dass sich ein menschlicher Nutzer oder ein Service (z.B. eine Web-Site) mittels eines digitalen Authentisierungszertifikats authentisieren kann.

Von der Google Play Integrity API ist bekannt, das seine App gegenüber einem Server durch eine von einem Play Integrity Server ausgestellte Attestierung nachweisen kann, dass der ausgeführte App-Programmcode mit der im Play-Store (App Store) hinterlegten Version übereinstimmt, dass die App über den Google Play-Store installiert wurde, und dass das verwendete Gerät als nicht-manipuliert erkannt wird.

Der Inhalt der von Google Play ausgestellten Attestierung (auch als "verbiet" bezeichnet) ist:

```
  • Angaben zum Request (z.B. Nonce, vom Programmierer an-
       gegebener Bezeichner des App-Packges)
  • appIntegrity: {
          // PLAY_RECOGNIZED, UNRECOGNIZED_VERSION, or
          UNEVALUATED.
          appRecognitionVerdict: "PLAY_RECOGNIZED"
          // The package name of the app.
          // This field is populated iff appRecognitionVer-
          dict != UNEVALUATED.
          packageName: "com.package.name"
          // The sha256 digest of app certificates.
          // This field is populated iff appRecognitionVer-
          dict != UNEVALUATED.
          certificateSha256Digest:
          ["6a6a1474b5cbbb2blaa57e0bc3"]
          // The version of the app.
          // This field is populated iff appRecognitionVer-
          dict != UNEVALUATED.
          versionCode: 42
       }
  • deviceIntegrity: {
          // "MEETS_DEVICE_INTEGRITY" is one of several pos-
          sible values.
          deviceRecognitionVerdict:
          ["MEETS_DEVICE_INTEGRITY"]
       }
  • accountDetails: {
       // This field can be LICENSED, UNLICENSED, or
       UNEVALUATED.
       appLicensingVerdict: "LICENSED"
       }
```

Eine App wird dabei also eindeutig durch ihren Namen (packageName), Versionsnummer (versionCode) und durch einen ihr zugeordneten Hash-Wert (certificateSha256Digest) identifiziert. Das Gerät wird jedoch nicht identifiziert oder authentisiert, sondern es wird nur eine Information über das Gerät bestätigt (MEETS_DEVICE_INTEGRITY). Es bleibt somit unbekannt, um welches Gerät es sich handelt. Dies ist in einem Endkundenumfeld sinnvoll, um die Privacy zu schützen.

Bei einer Attestierung, z.B. wie sie von einem Trusted Platform Module TPM bekannt ist, kann durch eine Attestierung eine Information zu der ausgeführten Software bestätigt werden (siehe z.B. Linux Integrity Measurement Architecture IMA. Über eine Policy kann flexibel festgelegt werden, welche Dateien "gemessen" werden, d.h. in einem Measurement-Report enthalten sind (z.B. von einem Root-Nutzer gelesene Dateien).

Von TCG DICE ist bekannt, dass beim Startvorgang eine von der geladenen und ausgeführten Firmware/Software abhängige Schlüsselableitung erfolgt.

Allgemein ist eine SBOM "Software Bill of Material" bekannt, eine Spezifikation der auf einem Gerät oder in einem Software-Paket enthaltenen Softwarekomponenten.

Es ist eine "Digital Bill of Material" DBOM bekannt, ein Projekt der Linux Foundation. Darüber sollen entlang von Lieferketten unterschiedliche Attestierungen ausgetauscht werden. Mit dem Begriff "Attestierung" ist hier nicht eine kryptographische Attestierungsdatenstruktur gemeint, sondern allgemein eine Information über ein Artefakt, die entlang der Lieferkette anderen bereitgestellt wird und dadurch Informationen über das Artefakt bereitstellt, d.h. bestätigt. Diese kann jedoch z.B. durch eine digitale Signatur kryptographisch geschützt sein.

### Als Beispiel wird genannt:

The Digital Bill of Materials for a given artifact is the stack of attestations on one or more channels that relate to that artifact. For example, a computer server in an enterprise data center may have the following attestations in its Digital Bill of Materials:
- Operational events attested to automatically on a local Private channel maintained by the enterprise
- Hardware content data attested to on Public channel maintained by the server vendor
- Software Bill of Material data attested to on a Broadcast channel maintained by the server operating system vendor
- Risk assessment data attested to on a Private channel maintained by a risk analysis services provider
- Vulnerability notices attested to on a Private channel maintained by a Managed Services provider
- Indicator of Compromise notices attested to on a Private channel maintained by an Information Sharing and Analysis Organization (ISAO)
- Regulatory data attested to on a Broadcast channel by an industry regulatory agency

In IETF RFC9472 "A YANG Data Model for Reporting Software Bills of Materials (SBOMs) and Vulnerability Information" ist beschrieben, dass die Manufacturer Usage Description MUD eines Gerätes eine Information enthält, unter welcher URL die dem Gerät zugeordnete SBOM und unter welcher URL Schwachstelleninformation für dieses Gerät abrufbar ist.

Die Aufgabe der Erfindung besteht darin, eine Lösung für eine verbesserte Attestierung eines Geräts bereitzustellen. Diese soll insbesondere für eine verbesserte Geräteauthentisierung verwendbar sein.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Bilden einer Attestierung eines Geräts,
mit den Schritten:
- ein Hinterlegen einer Hardware-Spezifikation des Geräts in einer Hardware-Attestierung, wobei die Hardware-Spezifikation auf einer Hardware-Identität des Geräts basiert,
- ein Erfassen der auf dem Gerät installieren Anwendungsprogramme,
- ein Erstellen einer Anwendungsprogramm-Spezifikation basierend auf den erfassten installieren Anwendungsprogrammen,
- ein Hinterlegen der Anwendungsprogramm-Spezifikation in einer Software-Attestierung, und
- ein Bilden der Attestierung des Geräts durch:
   o ein Hinterlegen der Hardware-Attestierung in der Attestierung, und
   o ein Hinterlegen der Software-Attestierung oder eines Verweises auf die Software-Attestierung in der Attestierung.

In anderen Worten betrifft die Erfindung ein Verfahren für ein Gerät, insbesondere ein IoT-Gerät, welches die Verwendung von Anwendungsprogrammen unterstützt und dessen Funktionalität sich durch die Anwendungsprogramme ergibt.

Anwendungsprogramme sind auch als Apps bezeichenbar. Die installieren Anwendungsprogramme sind im Sinne der Erfindung als Nutzeranwendungsprogramme ausgebildet. Nutzeranwendungsprogramme sind Anwendungsprogramme, welche nach Auslieferung des Geräts durch den Hersteller, insbesondere von einem Nutzer, auf dem Gerät installiert oder geladen wurden. Anwendungsprogramme sind damit modifizierbar in der Art ihrer Installation, in ihrer Konfiguration und in ihrer Existenz auf dem Gerät generell. Dadurch unterscheiden sich Nutzeranwendungsprogramme von Firmware, welche bei Auslieferung des Geräts fest installiert ist. Anwendungsprogramme sind somit im Sinne der Erfindung als Anwender-ladbare Software zu betrachten.

Das Gerät ist somit auch als "software-defined IoT device" bezeichenbar.

Eine nach dem Stand der Technik bekannte feste (d.h. ab Herstellung/Auslieferung beim Hersteller konstante) Geräteauthentisierung (der Hardware-Identität z.B. durch Seriennummer, Gerätebezeichner (Gerätehardware-Identifier)) ist bei App-unterstützenden IoT-Geräten nicht hinreichend aussagekräftig, da sich das, was das Gerät ausmacht, durch die eingerichtete Software-Konfiguration ergibt, d.h. durch die installierten Apps.

Da die Attestierung erfindungsgemäß durch die Anwendungsprogramm-Spezifikation eine Angabe zu auf dem Gerät installierten Anwendungsprogrammen aufweist bzw. darauf verweist, ist sie auch als "Installed App Attestation" bezeichenbar. Erfindungsgemäß enthält die Attestierung außerdem eine Hardware-Spezifikation des Geräts, insbesondere eine Hardware-Identifikation, durch welche das Gerät insbesondere eindeutig identifizierbar ist.

Erfindungsgemäß wird vorgeschlagen, dass in der Attestierung des Geräts, zusätzlich zu der der Hardwareidentität des Geräts, die auf dem Gerät installierten, d.h. vorliegenden Anwendungsprogramme (Apps), insbesondere kryptographisch geschützt, hinterlegt, d.h. angegeben werden bzw. darauf verwiesen wird. Durch die Attestierung des Geräts wird das Gerät somit durch eine Kombination der auf dem Gerät installierten Apps und der Geräte-Hardware-Identität (Geräteidentifier) und/oder der Hardware-Komponenten des Geräts authentisiert.

Dies hat den Vorteil, dass das die Attestierung des Geräts nicht nur die Hardware-Identität (insbesondere Seriennummer) aufweist, sondern eine Kombination aus Hardware-Identität und der Spezifikation der auf dem Gerät aktuell installierten Anwendungsprogramme Apps. Die Attestierung des Geräts ist damit aussagekräftiger, da sie neben der Hardware-Identität auch die vorliegenden Apps bestätigt. Gerät, auch "App-unterstützendes IoT-Gerät", identifiziert sich durch die erfindungsgemäß gebildete Attestierung bei einer Authentisierung somit nicht nur durch seine Hardware-Identität, (insbesondere einem Gerätebezeichner, Gerätehardware-Identifier und/oder Seriennummer,) sondern zusätzlich auch durch eine insbesondere kryptographisch geschützte Angabe, was das Gerät in Hinsicht auf seine Funktionalität ausmacht, d.h. welche Funktionalität es realisiert. Diese Eigenschaft (welche Funktionalität es realisiert) ist durch die auf dem Gerät installierten Apps charakterisiert. Diese Eigenschaft ändert sich beim Installieren oder Löschen von Apps. Das App-unterstützende IoT-Gerät identifiziert sich bei einer Authentisierung somit nicht nur mit seinem festen Gerätebezeichner, sondern zusätzlich mit einer von den installierten Apps abhängigen Angabe, was das Gerät funktional ausmacht. Die Attestierung gibt somit zusätzlich an, welche Funktionalität das Gerät nach Auslieferung durch den Hersteller erlernt hat.

Zusammengefasst ermöglicht die erfindungsgemäße Attestierung eine aussagekräftige Identifizierung eines Software-definierten IoT-Geräts, d.h. einem Gerät, dessen Funktionalität sich durch die installierten Apps ergibt. Eine Gegenstelle, gegenüber der sich das App-unterstützende IoT-Gerät authentisiert, kann dadurch verlässlich ermitteln, um welche Art von Gerät es sich handelt. Das Gerät authentisiert sich also nicht nur mit Hersteller/Modell/Seriennummer des Geräts an sich, sondern auch mit einer Information zu der auf dem Gerät installierten Apps. Die Gegenstelle kann abhängig von der bereitgestellten erfindungsgemäßen Attestierung des Geräts einen Zugriff dieses Geräts akzeptieren, abweisen oder einschränken.

Die erfindungsgemäße Attestierung ist auch als "Installed-App-Attestierung" bezeichenbar. Erfindungsgemäß werden durch die Attestierung nicht die Apps des Geräts authentisiert und eine Ausgabe erzeugt, die angibt, dass die Integrität des Geräts nicht gefährdet ist, sondern es wird durch die Anwendungsprogramm-Spezifikation konkret angegeben, welche Apps bzw. welche Art von Apps auf diesem Gerät vorliegen, d.h. installiert sind.

Das Bilden der Attestierung des Geräts erfolgt durch:
- ein Hinterlegen der Hardware-Attestierung und der Software-Attestierung in der Attestierung und/oder
- ein Hinterlegen der Hardware-Attestierung und eines Verweises auf die Software-Attestierung in der Attestierung.

Der Verweis auf die Software-Attestierung ist insbesondere ausgebildet als eine Referenz und/oder eine Zuordnung.

Die Attestierung des Geräts, auch "Installed-App-Attestierung", ist somit insbesondere in Form einer von der Hardware-Attestierung, insbesondere Geräteauthentisierungszertifikat, separaten Software-Attestierung, insbesondere Software-Bestätigungszertifikat, ausgestaltet, wobei das Software-Bestätigungszertifikat dem Geräteauthentisierungszertifikat zugeordnet ist oder zuordenbar ist. Bei der Software-Attestierung handelt sich insbesondere um ein von einer Zertifizierungsstelle gebildetes Attributzertifikat oder um eine vom Gerät gebildete Attestierung.

In einer anderen Variante ist die Information zu den installierten Apps (Software-Attestierung) in der selben Attestierung wie die Hardware-Attestierung, insbesondere das Geräteauthentisierungszertifikat, enthalten, insbesondere in einer Extension eines Geräteauthentisierungszertifikat nach X.509v3. In einer Weiterbildung der Erfindung umfasst das erfindungsgemäße Verfahren die weiteren Schritte:
- Ein Erfassen der Hardware-Identität des Geräts,
- ein Erstellen der Hardware-Spezifikation basierend auf der Hardware-Identität.

In einer weiteren Weiterbildung der Erfindung ist die Hardware-Identität ausgebildet als:
- eine Seriennummer,
- ein Gerätebezeichner und/oder
- ein Gerätezertifikat.

Das Gerätezertifikat umfasst insbesondere einen Gerätehersteller, einen Gerätetyp (Modell, Version) und die Seriennummer des Geräts.

In einer weiteren Weiterbildung der Erfindung umfasst das erfindungsgemäße Verfahren die weiteren Schritte:
ein Bereitstellen der Attestierung und/oder
- ein Hinterlegen der Attestierung in einer Speichereinheit, insbesondere in einer Speichereinheit eines Netzwerks und/oder einem Cloud-Speicher.

In einer weiteren Weiterbildung der Erfindung wird das erfindungsgemäße Verfahren ausgeführt, ausgelöst durch:
- eine Konfigurationseinstellung, welche Zeitpunkte, insbesondere sich periodisch wiederholende Zeitpunkte, insbesondere Zeitpunkte, welche sich in stündlichen, täglichen, wöchentlichen, monatlichen und/oder jährlichen Intervalle wiederholen, vorgibt,
- einen Aufbau einer Kommunikationsverbindung durch das Gerät,
- einen Aufbau einer Kommunikationsverbindung durch zumindest eines der auf dem Gerät installieren Anwendungsprogramme,
- eine Installation eines weiteren Anwendungsprogramms auf dem Gerät,
- eine Deinstallation eines bisher auf dem Gerät installieren Anwendungsprogramms und/oder
- eine Aktualisierung, insbesondere einem Update, von zumindest einem der auf dem Gerät installieren Anwendungsprogrammen.

Die Attestierung, auch als Installed-App-Attestierung bezeichnet, wird somit bei Bedarf, d.h. bei Aufbau einer Kommunikationsbeziehung oder zeitlich regelmäßig, z.B. stündlich, täglich, wöchentlich, monatlich, jährlich gebildet und insbesondere bereitgestellt. Sinnvollerweise wird eine aktuelle Installed-App-Attestierung mit Angabe der auf dem Gerät installierten Apps bei Installation, Deinstallation oder dem Update einer oder mehrerer Apps vom Gerät angefordert oder automatisch ausgestellt und dem Gerät bereitgestellt.

In einer weiteren Weiterbildung der Erfindung ist die Anwendungsprogramm-Spezifikation für die installieren Anwendungsprogramme jeweils ausgebildet als:
- eine Identifikation, insbesondere eine eindeutige Identifikation,
- eine Art des jeweiligen installieren Anwendungsprogrammes, und/oder
- eine Kategorie des jeweiligen installieren Anwendungsprogrammes, wobei die Kategorie insbesondere auf einen Ursprung des installieren Anwendungsprogrammes von:
   o einem Hersteller des Geräts oder
   o einem Drittanbieter und/oder
   o einem Urspruch, welcher durch den Hersteller des Geräts kuratiert ist,
   hinweist.

Wie zuvor beschrieben werden erfindungsgemäß durch die Attestierung nicht die Apps des Geräts authentisiert und eine Ausgabe erzeugt, die angibt, dass die Integrität des Geräts nicht gefährdet ist, sondern es wird durch die Anwendungsprogramm-Spezifikation konkret angegeben, welche Apps bzw. welche Art von Apps auf diesem Gerät vorliegen, d.h. installiert sind.

Vorzugsweise werden die installierten Apps durch die Identifikation eindeutig angegeben und identifiziert, sodass eine Information vorliegt, welche Apps konkret auf dem Gerät installiert sind.

In einer Variante ist es jedoch auch möglich, jeweils lediglich eine Art des installieren Anwendungsprogrammes in der Installed-App-Attestierung anzugeben, insbesondere jeweils eine Angabe, welchen App-Kategorien die auf dem Gerät installierten Apps zugeordnet sind. Dadurch kann eine grobgranulare Information zu den installierten Apps bereitgestellt werden, insbesondere ob neben Gerätehersteller-Apps, auch 3rd-Party-Apps (d.h. von Drittanbietern) installiert sind. Auch kann insbesondere unterschieden werden, ob neben Hersteller-kuratierten Apps auch andere Apps installiert sind, die nicht aus diesem kuratierten App-store stammen. Entsprechend kann ein Betreiber eines "Operational technology systems" (OT-Systems) in einem App-Store festlegen, welche Apps durch ihn explizit freigegeben sind. Dann kann durch die Installed-App-Attestierung angegeben werden, ob auf einem Gerät ausschließlich Apps installiert sind, die gemäß des OT-Betreibers explizit freigegeben sind, oder ob auf einem Gerät beispielsweise nur Gerätehersteller-Apps oder weitere 3rd-Party-Apps installiert sind.

In einer weiteren Weiterbildung der Erfindung umfasst das Erfassen der auf dem Gerät installieren Anwendungsprogramme ein Erfassen einer Identität der installieren Anwendungsprogramme.

In einer weiteren Weiterbildung der Erfindung umfasst die Anwendungsprogramm-Spezifikation für die installieren Anwendungsprogramme jeweils:
- eine Identifikation, insbesondere:
   o einen Namen,
   o einen Uniform Resource Identifier (URI),
   o einen Uniform Resource Locator (URL) und/oder
   o einen Hash-Wert
   des jeweiligen installierten Anwendungsprogramms,
- eine Angabe zu einem Anbieter des jeweiligen installierten Anwendungsprogramms,
- eine Angabe zu einem Entwickler des jeweiligen installierten Anwendungsprogramms,
- eine Angabe zu einer Herkunft, insbesondere eine Download-Quelle, des jeweiligen installierten Anwendungsprogramms,
- eine Angabe zu einer Art der durchgeführten Installation des jeweiligen installierten Anwendungsprogramms,
- eine Angabe zu einem für das jeweilige installierte Anwendungsprogramm vorhanden Zugriffsrecht, insbesondere auf ein Netzwerk, und/oder
- eine Angabe zu einer Ausführungszeit des jeweiligen installierten Anwendungsprogramms, auch als eine "Installed-App-Usage-Attestierung" bezeichenbar.

Eine App ist in der Installed-App-Attestierung durch einen App-Identifier identifiziert, insbesondere einem Namen, eine URI oder URL, oder dem Hash-Wert des jeweiligen installierten Anwendungsprogramms, insbesondere des App-Installationspakets.

Weiterhin ist es möglich, dass abhängig von den installierten Apps ein Hash-Wert (eindeutig) gebildet wird, der in der Installed-App-Attestierung enthalten ist. Dadurch ist zwar ggf. durch einen Kommunikationspartner nicht direkt ermittelbar, welche Apps konkret auf dem App-unterstützenden IoT-Gerät installiert sind. Er kann jedoch anhand des Hash-Werts erkennen, ob die Menge installierter Apps einem erwarteten Stand entspricht, beziehungsweise ob die Menge installierter Apps verändert ist.

Zusätzlich kann außerdem ein App-Anbieter, ein App-Entwickler, die verwendete Download-Quelle (App-Store), von dem die App geladen wurde, angegeben sein.

Weiterhin kann die Art der erfolgten Installation der App charakterisiert werden, z.B. ob sie durch lokale Geräteinteraktion ausgewählt wurde oder ob sie über ein Device Management System geladen ist, und ggf. eine Identifikation (URL, IP-Adresse, DNS-Name) des Device Management Systems, das die App installiert hat. Ein Device Management Systems kann auch als Edge Management bezeichnet werden.

Weiterhin ist in der Anwendungsprogramm-Spezifikation nach einer Ausführungsform enthalten, welcher Admin-Zugang zu dem Gerät vorliegt (z.B. Hash-Wert der Remote Access Credentials, Root-Zertifikat oder Public-Key-Zertifikat, das das Gerät zur Überprüfung eines Remote-Zugangs oder für eine Cloud-Anbindung verwendet). Diese kann bei der Geräteauthentisierung übermittelt werden. Dadurch kann die Gegenstelle erkennen, wer die Kontrolle über dieses Gerät hat.

Weiterhin kann die Adresse (URL, IP-Adresse, DNS-Name) eines auf dem Gerät eingerichteten Device Management Servers oder einer Cloud-Verbindung oder ein davon abhängig gebildeter Hash-Wert attestiert werden. Auch dadurch kann die Gegenstelle erkennen, wer die Kontrolle über dieses Gerät hat. Insbesondere kann sich diese Angabe darauf beziehen, wer die Kontrolle darüber hat, welche Apps auf diesem Gerät installiert sind.

Auch ist es möglich, dass die Möglichkeiten einer App, auf ein Netzwerk zuzugreifen, in der Installed-App-Attestierung enthalten ist. Dadurch kann beispielsweise erkannt werden, welche der installierten Apps überhaupt auf ein Netzwerk Zugriff haben und welche nur lokal auf dem Gerät agieren, auf welche Netzwerkschnittstellen sie jeweils Zugriff haben (z.B. externe Schnittstelle zu einem Cloud-System oder zu einem Fabrik-Netzwerk und/oder einem Enterprise-Netzwerk, interne Schnittstelle zu einem Steuerungsnetzwerk oder einem TSN-Netzwerk) . Weiterhin ist es möglich, dass eine Installed-App-Usage-Attestierung ausgestellt wird. Diese kann angeben, welche der installierten Apps aktuell oder in einem Zeitfenster (z.B. letzte Stunde, letzter Tag) tatsächlich ausgeführt wurden.

In einer weiteren Weiterbildung der Erfindung umfasst die Anwendungsprogramm-Spezifikation:
- eine Angabe zu einem für das Gerät vorhandene Administratorrecht und/oder einem für das Gerät vorhandenen Administrator-Zugang, insbesondere in Form eines Hash-Werts der Remote Access Credentials, einem Root-Zertifikat und/oder einem Public-Key-Zertifikat, das das Gerät zur Überprüfung eines Remote-Zugangs oder für eine Cloud-Anbindung verwendet,
- eine Adresse, insbesondere ein Uniform Ressource Locator (URL), eine IP-Adresse und/oder ein Domain-Name-Server-Name (DNS-Name)), eines auf dem Gerät eingerichteten Servers, insbesondere eines Geräte-Management-Servers,
- eine Adresse einer Cloud-Verbindung des Geräts, und/oder
- ein abhängig von einer Adresse gebildeter Hash-Wert.

In einer weiteren Weiterbildung der Erfindung umfasst die Anwendungsprogramm-Spezifikation alle auf dem Gerät installierten Anwendungsprogramme.

Die Anwendungsprogramm-Spezifikation umfasst somit die auf dem Gerät installierten Anwendungsprogramme komplett, d.h. vollständig.

Das Erfassen der auf dem Gerät installieren Anwendungsprogramme betrifft somit insbesondere alle auf dem Gerät installieren Anwendungsprogramme, d.h. es werden alle installieren Anwendungsprogramme erfasst und keines der auf dem Gerät installieren Anwendungsprogramme wird weggelassen.

In einer alternativen Ausführungsform ist es jedoch auch möglich, dass lediglich eine vorgebbare Teilmenge der installierten Apps durch eine Installed-App-Attestierung bestätigt werden. Das Erfassen der auf dem Gerät installieren Anwendungsprogramme und/oder das Erstellen der Anwendungsprogramm-Spezifikation basierend auf den erfassten installieren Anwendungsprogrammen betrifft nach dieser alternativen Ausführungsform somit nur einen Teil der installieren Anwendungsprogramme. Insbesondere können alle installieren Anwendungsprogramme erfasst werden und nach definierten Regeln nur ein Teil der installieren Anwendungsprogramme in die Anwendungsprogramm-Spezifikation aufgenommen werden. So wird außerdem insbesondere nach der Kategorie des jeweiligen installierten Anwendungsprogrammes entschieden, ob ein installiertes Anwendungsprogramme in die Anwendungsprogramm-Spezifikation aufgenommen wird. Insbesondere können als Kategorien-Gerätehersteller-Apps, 3rd-Party-Apps, Gerätehersteller-installierte Apps, Anwender-installierte Apps unterschieden werden.

Die Erfindung umfasst außerdem ein Computerprogrammprodukt, umfassend ein Computerprogramm (insbesondere eine Softwarekomponente, auch als "Installed App Attestation Builder" bezeichenbar), wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird, ausgebildet zum Bilden einer Attestierung eines Geräts.

Die Erfindung umfasst außerdem Gerät aufweisend das erfindungsgemäße Computerprogrammprodukt. Das Gerät ist insbesondere ausgebildet als ein App-unterstützenden IoT-Gerät, ein Steuergerät, und/oder ein industrielles Gerät.

In einer Weiterbildung der Erfindung weist das erfindungsgemäße Gerät außerdem eine Ausgabeeinheit auf, ausgebildet die Attestierung des Geräts (Installed App Attestation) bereitzustellen, insbesondere auszugeben.

Die Erfindung umfasst außerdem eine Anlage aufweisend mindestens ein erfindungsgemäßes Gerät.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens, und
- Fig. 2: eine schematische Darstellung eines erfindungsgemäßen Geräts.

### DETAILLIERTE BESCHREIBUNG DER ERFINDUNG

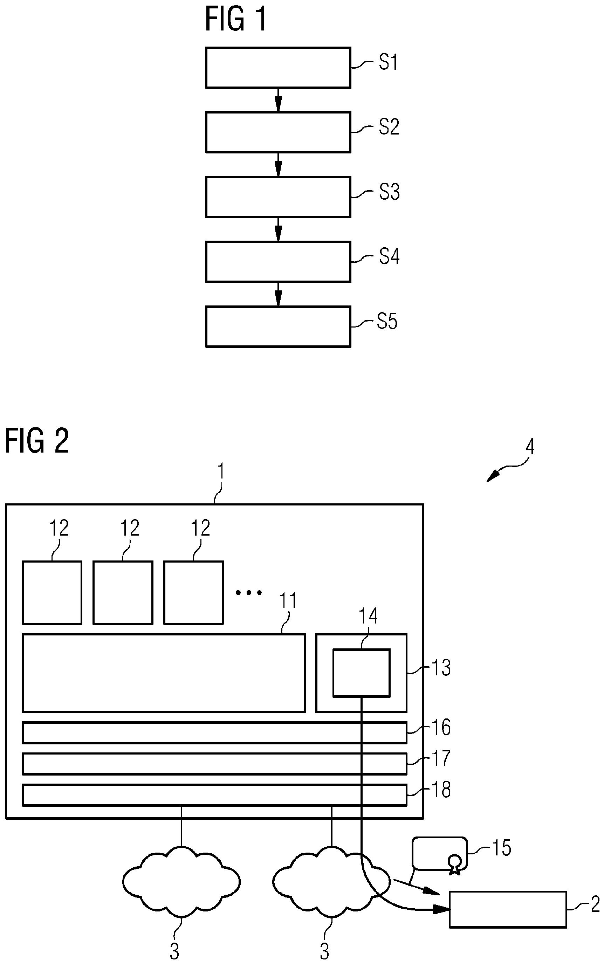

Fig. 1 zeigt ein Ablaufdiagramm des erfindungsgemäßen Verfahrens zum Bilden einer Attestierung eines Geräts,
mit den Schritten:
- Schritt S1: Ein Hinterlegen einer Hardware-Spezifikation des Geräts in einer Hardware-Attestierung, wobei die Hardware-Spezifikation auf einer Hardware-Identität des Geräts basiert,
- Schritt S2: Ein Erfassen der auf dem Gerät installieren Anwendungsprogramme,
- Schritt S3: Ein Erstellen einer Anwendungsprogramm-Spezifikation basierend auf den erfassten installieren Anwendungsprogrammen,
- Schritt S4: Ein Hinterlegen der Anwendungsprogramm-Spezifikation in einer Software-Attestierung, und
- Schritt S5: Ein Bilden der Attestierung des Geräts durch:
   o ein Hinterlegen der Hardware-Attestierung in der Attestierung, und
   o ein Hinterlegen der Software-Attestierung oder eines Verweises auf die Software-Attestierung in der Attestierung.

Fig. 2 eine schematische Darstellung eines erfindungsgemäßen Geräts 1, insbesondere ein Realisierungsbeispiel ein App-unterstützendes IoT-Gerät 1, ausgebildet eine durch eine kryptographische Prüfsumme geschützte Installed-App-Attestation 15 zu bilden und diese einem anderen IoT-Gerät 2 bei einer Authentisierung des App-unterstützenden IoT-Geräts 1 bereitzustellen. Das erfindungsgemäße Gerät 1 und das andere Gerät 2 sind Teil einer Anlage 4.

Das Gerät weist eine Ausführungsumgebung 11 für Anwendungsprogramme 12, insbesondere Apps 12, einen App-Manager 12, eine Komponente 14 zum Bilden der Attestierung 15, ein Betriebssystem 16, eine CPU 17 mit Speichereinheit und eine Schnittstelle 18 zu einem Netzwerk 3 auf. Das andere IoT-Gerät 2 ist ebenfalls mit dem Netzwerk 3 verbunden.

Das andere IoT-Gerät 2 kann basierend auf der Installed-App-Attestation 15 eine Vertrauenswürdigkeitsinformation des App-unterstützenden IoT-Geräts 1 ermitteln und davon abhängig den Verbindungsaufbauanforderung abweisen oder die Berechtigungen des App-unterstützenden IoT-Geräts 1 anpassen. Im dargestellten Beispiel wird die Installed-App-Attestation 15 von einer "Installed App Attestation Builder"-Komponente 14 des App-Managers 13 gebildet.

In einer Weiterbildung kann die Installed-App-Attestation 15 eine Information enthalten, wer die jeweilige App 12 auf das IoT-Gerät 1 gebracht hat, z.B. ob es sich um eine App 12 handelt, die von dem Gerätehersteller des App-unterstützenden IoT-Geräts 1 auf das Gerät 1 gebracht wurde, und welche von einem Anwender nachinstalliert wurden. Diese Information kann als Basis für eine Geräteintegritätsprüfung dienen, bei der überprüft wird, welche der installierten Apps 12 zulässigerweise auf dem App-unterstützenden IoT-Gerät 1 installiert sind. Es kann ebenso erkannt werden, dass eine unzulässige App 12 installiert ist wie auch, dass eine grundsätzlich zulässige App 12 unzulässigerweise auf einem bestimmten App-unterstützenden IoT-Gerät 1 installiert ist.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Bilden einer Attestierung (15) eines Geräts (1),
mit den Schritten:
- ein Hinterlegen einer Hardware-Spezifikation des Geräts (1) in einer Hardware-Attestierung, wobei die Hardware-Spezifikation auf einer Hardware-Identität des Geräts (1) basiert,
- ein Erfassen der auf dem Gerät (1) installieren Anwendungsprogramme (12),
- ein Erstellen einer Anwendungsprogramm-Spezifikation basierend auf den erfassten installieren Anwendungsprogrammen (12),
- ein Hinterlegen der Anwendungsprogramm-Spezifikation in einer Software-Attestierung, und
- ein Bilden der Attestierung (15) des Geräts (1) durch:
o ein Hinterlegen der Hardware-Attestierung in der Attestierung (15), und
o ein Hinterlegen der Software-Attestierung oder eines Verweises auf die Software-Attestierung in der Attestierung (15).

2. Verfahren nach Anspruch 1,
mit den weiteren Schritten:
- Ein Erfassen der Hardware-Identität des Geräts (1),
- ein Erstellen der Hardware-Spezifikation basierend auf der Hardware-Identität.

3. Verfahren nach Anspruch 2,
wobei die Hardware-Identität ausgebildet ist als:
- eine Seriennummer,
- ein Gerätebezeichner und/oder
- ein Gerätezertifikat.

4. Verfahren nach einem der vorhergehenden Ansprüche,
mit dem weiteren Schritt:
- ein Bereitstellen der Attestierung (15) und/oder
- ein Hinterlegen der Attestierung (15) in einer Speichereinheit (17), insbesondere in einer Speichereinheit eines Netzwerks (3) und/oder einem Cloud-Speicher.

5. Verfahren nach einem der vorhergehenden Ansprüche,
wobei das Verfahren ausgeführt wird, ausgelöst durch:
- eine Konfigurationseinstellung, welche Zeitpunkte, insbesondere sich periodisch wiederholende Zeitpunkte, vorgibt,
- einen Aufbau einer Kommunikationsverbindung durch das Gerät (1),
- einen Aufbau einer Kommunikationsverbindung durch zumindest eines der auf dem Gerät (1) installieren Anwendungsprogramme (12),
- eine Installation eines weiteren Anwendungsprogramms (12) auf dem Gerät (1),
- eine Deinstallation eines bisher auf dem Gerät (1) installieren Anwendungsprogramms (12) und/oder
- eine Aktualisierung, insbesondere einem Update, von zumindest einem der auf dem Gerät (1) installieren Anwendungsprogrammen (12).

6. Verfahren nach einem der vorhergehenden Ansprüche,
wobei die Anwendungsprogramm-Spezifikation für die installieren Anwendungsprogramme (12) jeweils ausgebildet ist als:
- eine Identifikation,
- eine Art des jeweiligen installieren Anwendungsprogrammes (12), und/oder
- eine Kategorie des jeweiligen installieren Anwendungsprogrammes (12), wobei die Kategorie insbesondere auf einen Ursprung des installieren Anwendungsprogrammes (12) von:
o einem Hersteller des Geräts (1) oder
o einem Drittanbieter und/oder
o einem Urspruch, welcher durch den Hersteller des Geräts (1) kuratiert ist,
hinweist.

7. Verfahren nach einem der vorhergehenden Ansprüche,
wobei das Erfassen der auf dem Gerät (19 installieren Anwendungsprogramme (12) ein Erfassen einer Identität der installieren Anwendungsprogramme (12) umfasst.

8. Verfahren nach einem der vorhergehenden Ansprüche,
wobei die Anwendungsprogramm-Spezifikation für die installieren Anwendungsprogramme (12) jeweils umfasst:
- eine Identifikation, insbesondere:
o einen Namen,
o einen Uniform Resource Identifier,
o einen Uniform Resource Locator und/oder
o einen Hash-Wert
des jeweiligen installierten Anwendungsprogramms (12),
- eine Angabe zu einem Anbieter des jeweiligen installierten Anwendungsprogramms (12),
- eine Angabe zu einem Entwickler des jeweiligen installierten Anwendungsprogramms (12),
- eine Angabe zu einer Herkunft, insbesondere eine Download-Quelle, des jeweiligen installierten Anwendungsprogramms (12),
- eine Angabe zu einer Art der durchgeführten Installation des jeweiligen installierten Anwendungsprogramms (12),
- eine Angabe zu einem für das jeweilige installierte Anwendungsprogramm (12) vorhanden Zugriffsrecht, insbesondere auf ein Netzwerk (3), und/oder
- eine Angabe zu einer Ausführungszeit des jeweiligen installierten Anwendungsprogramms (12).

9. Verfahren nach einem der vorhergehenden Ansprüche,
wobei die Anwendungsprogramm-Spezifikation umfasst:
- eine Angabe zu einem für das Gerät (1) vorhandene Administratorrecht und/oder einem für das Gerät (1) vorhandenen Administrator-Zugang,
- eine Adresse eines auf dem Gerät (1) eingerichteten Servers,
- eine Adresse einer Cloud-Verbindung des Geräts (1), und/oder
- ein abhängig von einer Adresse gebildeter Hash-Wert.

10. Verfahren nach einem der vorhergehenden Ansprüche,
wobei die Anwendungsprogramm-Spezifikation alle auf dem Gerät (1) installierten Anwendungsprogramme (12) umfasst.

11. Computerprogrammprodukt, umfassend ein Computerprogramm (14), wobei das Computerprogramm (14) in eine Speichereinrichtung einer Recheneinheit (17) ladbar ist, wobei mit dem Computerprogramm (14) die Schritte eines Verfahrens nach einem der Ansprüche 1 bis 10 ausgeführt werden, wenn das Computerprogramm (14) auf der Recheneinheit (17) ausgeführt wird, ausgebildet zum Bilden einer Attestierung (15) eines Geräts (12) .

12. Gerät (1) aufweisend das Computerprogrammprodukt (14) nach Anspruch 11.

13. Gerät (1) nach Anspruch 12,
außerdem aufweisend eine Ausgabeeinheit (18), ausgebildet die Attestierung (15) des Geräts (1) bereitzustellen.

14. Anlage (4) aufweisend mindestens ein Gerät (1) nach Anspruch 12 oder 13.
